# EUROPEAN PATENT SPECIFICATION

(11) **EP 3 258 773 B1**
(45) Date of publication and mention of the grant of the patent: **13.01.2021**
(21) Application number: 16752846.2
(22) Date of filing: 12.02.2016
(51) Int. Cl.: A01G 31/02, A01G 31/06, A01G 17/06

(54) **SOILLESS PLANT GROWING SYSTEMS**
ERDLOSES PFLANZENZUCHTSYSTEM
SYSTÈMES DE CULTURE HYDROPONIQUE DE PLANTES

(30) Priority: 18.02.2015 US 201562117484 P
(43) Date of publication of application: 27.12.2017
(73) Proprietor: Fogworks LLC, Westlake, Ohio 44145 (US)
(72) Inventor: THOMA, Zachary Brian, Westlake, Ohio 44145 (US)
(74) Representative: Mader, Joachim
(86) International application number: PCT/US2016/017706
(87) International publication number: WO 2016/133804

(56) References cited:
- WO-A1-2014/190797
- CN-A- 102 845 293
- CN-U- 203 087 155
- TW-U- M 473 695
- US-A- 4 514 930
- US-A- 5 136 804
- US-A- 5 937 575
- US-A1- 2009 293 357
- US-A1- 2011 023 359
- US-A1- 2011 173 884

## Description

### CROSS REFERENCES TO RELATED APPLICATIONS

This application claims priority from US provisional application serial No. 62/117,484 filed on February 18, 2015.

### FIELD

The present subject matter relates to systems for growing plants without soil, and particularly to aeroponic systems.

### BACKGROUND

Hydroponic plant growing systems are well known in the art. Such systems typically support plants above a source of water such that roots from the plants are in contact with the water. Although satisfactory in many regards, such systems require monitoring of the water level and/or periodic refilling of water so that the plant roots remain in contact with the water. In addition, hydroponic systems require significant space and typically have a large "footprint" as such systems are usually horizontally arranged to establish contact between plants and the water surface. Furthermore, using a common water medium can lead to transmission of water-based diseases or pathogens between plants.

Certain plant growing systems such as aeroponic systems employ fog or water mist generators that direct fog or mist to plant roots in a closed chamber or region. Such systems are useful, however humidity controls are typically needed in order to avoid excessive humidity for prolonged time periods. Excessive humidity can lead to mold, disease, or other undesirable consequences. Humidity controls increase cost and complexity of plant growing systems and thus may not be desirable.

Closed plant growing systems are typically used to promote water delivery or availability to plant roots. However, such closed systems typically limit water delivery or availability to other regions of plants such as leaves and shoots. Such closed systems can also interfere with plant exposure to ambient light, thus requiring external lights for the system. Closed systems may also be undesirable as such systems may require controls to administer carbon dioxide, fresh air, or other gases. As will be appreciated, such controls increase complexity and costs of the resulting system.

Reference document CN 102 845 293 A relates to cultivation equipment in the agricultural engineering field, which comprises an ultrasonic atomizer, an atomization chamber, a water storage tank, an axial-flow fan, a solenoid valve, a water level detection sensor, a control box, a fog conveying and nutrient solution return pipe, a cultivation box, a cultivation plate and a bracket.

Reference document US 5,136,804A relates to an apparatus for aeroponically growing plants, comprising a housing including a partition defining an upper compartment and a lower compartment, the partition including means of supporting a plurality of plants with the roots exposed in the lower compartment and the shoots exposed in the upper compartment.

Reference document CN 203 087 155 U relates to an automatic spraying cultivation device, in particular to a spraying cultivation device capable of using an ultrasonic atomizer for atomization and automatically regulating and controlling the temperature and the humidity, and belongs to the technical field of soilless cultivation of plants.

Reference document US 2009/293357 A1 relates to an apparatus and a kit for liquid atomization of a nutrient rich liquid through air assisted atomizing nozzles providing an atmosphere to horticulture comprising a beneficial concentration in the atmosphere of the atomized nutrient rich liquid having a beneficial liquid droplet size and air to water ratio.

Reference document US 2011/173884 A1 relates to an improved auto-irrigating apparatus and more specifically to an auto-irrigating case that includes a submersible water pump and solar panels for automatically providing water to plants in a planter box.

Reference document WO 2014/190797 A1 relates to a vegetable carrying box, which includes a solution carrying box provided with a high-level liquid inlet and a low-level liquid outlet that are opposite to each other, where an area, which is between the liquid inlet and the liquid outlet, in the solution carrying box is provided with protruding diversion partitions to form a zigzag flow passage, and atomizer is disposed in the flow passage.

Accordingly, a need remains for a soilless system for growing plants which does not require water level monitoring or frequent water refilling. In addition, a need exists for a low cost soilless growing system which is free of humidity sensors and humidity controls. Furthermore, a need exists for a soilless growing system in which plant leaves and shoots are freely exposed to ambient air and light and not confined within a closed system, thereby avoiding costly gas administration provisions and controls. Exposing plant shoots and leaves to ambient air and light will also reduce the ability of pathogens to grow on the plants by eliminating the conditions in which the pathogens thrive.

### SUMMARY

The above noted problems are at least partly solved by a soilless plant growing system according to claim 1. The difficulties and drawbacks associated with previous approaches are addressed in the present subject matter as follows.

In one aspect, the present subject matter provides a soilless plant growing system comprising a receptacle having a bottom wall and one or more sidewalls extending upward from the bottom wall to a distal edge defining a receptacle open face. The system also comprises a tray sized and shaped to be positioned with the receptacle. The tray defines an underside and an oppositely directed topside. The tray also defines a plurality of openings extending between the underside and the top side. The system also comprises a fog production chamber in flow communication with the receptacle. The system additionally comprises a water reservoir in flow communication with the fog production chamber and including gravity feed provisions for enabling water flow from the reservoir to the fog production chamber, and maintaining a predetermined water level in the fog production chamber. The system also comprises a piezo-electric element disposed in the fog production chamber and at a height below the water level in the fog production chamber. The piezo-electric element is configured to generate water droplets from water in the chamber upon application of electric power to the piezo-eiectric element, wherein the water droplets migrate from the fog production chamber to the receptacle.

In another aspect, the present subject matter provides a soilless plant growing system comprising a receptacle for retaining airborne water droplets. The receptacle includes a bottom wall, a tray positioned above the bottom wall and defining a plurality of openings for holding plants. The receptacle is free of covers or lids extending over the tray. The system also comprises a fog production chamber in flow communication with the receptacle. The system also comprises a water reservoir in flow communication with the fog production chamber for supplying water to the fog production chamber. The water reservoir includes a spring biased outlet configured to maintain a predetermined water level in the fog production chamber. The system additionally comprises a piezo-electric element disposed in the fog production chamber for producing airborne water droplets. And, the system comprises controls for adjusting operation of the piezo-electric element to thereby vary production of the airborne water droplets.

In yet another aspect, the present subject matter provides a plant growing system comprising a receptacle defining a sloping bottom wall, a plurality of sidewalls extending upwardly from the bottom wall, and an open top face. The system also comprises a fog production chamber in flow communication with the receptacle. The system also comprises a piezo-electric element disposed in the fog production chamber. The piezo-electric element serves to generate water droplets, fog or mist upon submerging in water and application of electric power thereto. The system also comprises a water reservoir including (i) a housing for retaining a supply of water and (ii) gravity feed provisions configured to deliver water to the fog production chamber and maintain a predetermined water level in the fog production chamber. The system also comprises a tray disposed on the receptacle and extending over the top face of the receptacle, the tray defining a plurality of openings for holding plants. The system is free of covers, lids, or members extending over the tray.

As will be realized, the subject matter described herein is capable of other and different embodiments and its several details are capable of modifications in various respects, all without departing from the claimed subject matter. Accordingly, the drawings and description are to be regarded as illustrative and not restrictive.

### BRIEF DESCRIPTION OF THE DRAWINGS

Figure 1 is a perspective view of an embodiment of a plant growing system in accordance with the present subject matter.
Figure 2 is a perspective cross sectional view taken along a length dimension of the system depicted in Figure 1.
Figure 3 is an elevational view of the cross section of Figure 2 illustrating additional aspects of the plant growing system.
Figure 4 is a perspective view of the plant growing system of Figure 1 showing removal of a water reservoir from the system.
Figure 5 is an exploded view of the plant growing system of Figure 1 showing additional aspects and assembly of the system.

### DETAILED DESCRIPTION OF THE EMBODIMENTS

The plant growing systems of the present subject matter generally comprise a receptacle and tray for supporting one or more plants such that lower plant regions or plant portions are exposed to water droplets, fog or mist generally retained in the receptacle. The systems also comprise a generator for producing water droplets, fog or mist which are directed to the receptacle and plants supported therein. In many versions of the present subject matter, the generator is in the form of a piezo-electric element that is submerged in water in a fog production chamber. The systems additionally comprise a water reservoir which delivers water to the generator, and in many versions retains a relatively large quantity of water sufficient for operation of the system over a time period associated with desired plant growth. In particular versions of the systems, the system and in particular the receptacle includes water-recirculating provisions which direct condensed water droplets, fog or mist from the receptacle to the fog production chamber. Additional aspects and components of the systems include, but are not limited to, fan assemblies for directing the water droplets, fog or mist from the fog production chamber to the receptacle and one or more vents for directing water droplets, fog or mist in the receptacle and under the tray to region(s) above the tray.

The various plant growing systems of the present subject matter are preferably free of covers, lids, or other like members extending over the tray and/or receptacle. Avoiding the use of such components promotes exposure of upper regions or portions of plants supported in the tray to ambient air and light. Furthermore, avoiding the use of such components avoids the problems associated with closed growing systems. In addition, avoiding such components reduces cost and complexity of the resulting system.

The various plant growing systems of the present subject matter are free of sensors and associated controls relating to maintaining prescribed temperatures, humidity levels, and/or gas composition for plants in the system. Avoiding the use of such sensors and controls, reduces the cost and complexity of the resulting system.

Details as to the components of the present subject matter systems, operation and use of the systems are as follows. In many of the descriptions herein, references to "horizontal," "vertical," and/or "sloping" or "inclined" are made. It will be understood that these references and others are with regard to the growing system in its use position such as placed upon a generally flat and horizontal table or shelf.

### Receptacles and Trays

In many embodiments, the various systems utilize a receptacle having a bottom wall and one or more sidewalls extending upward from the bottom wall to define a generally continuous receptacle distal edge and generally open receptacle top face. The receptacle can be in a variety of different shapes, however a square or rectangular shape has been found useful. The sidewalls are typically vertical or substantially so and extend upward and around the periphery of the bottom wall. The receptacle can include one or more legs or support members upon which the receptacle is positioned. Again, the present subject matter includes a wide array of configurations for the receptacle.

The tray is sized and shaped to be positioned within the receptacle or enclosure or be supported across the open face of the receptacle. The tray defines an under side and an oppositely directed top side. The tray also defines one or more openings extending through the tray between the under side and the top side. The openings are configured and arranged for supporting one or more plants in each opening. In many embodiments, the tray includes any number of openings such as from 1 to about 100 or more. Typically, the openings are uniformly arranged and generally equally distant from one another across a top side of the tray. However, the present subject matter includes trays having nonuniform arrangements of openings and/or unequal distances between openings. In particular embodiments, the tray can include a lip or receiving region configured to fittingly engage the distal edge of the sidewalls of the receptacle. A fitting engagement promotes retention of air-borne water droplets, fog, or mist in the interior region of the receptacle defined between the underside of the tray, the receptacle bottom wall, and the sidewalls.

As previously noted, openings in the tray serve to support one or more plants. The one or more plants are positioned in the openings such that the lower region of the plant, e.g., its roots, extends downward into the receptacle for contact with water droplets, fog, or mist. The upper region of the plant, e.g., leaves and shoots, is directed upward from the topside of the tray. One or more inserts having a similar size and shape as the openings can be inserted in respective openings and assist in supporting plants. For example, foam material or rubber material having a circular shape with a slit or aperture extending through the material can be used as inserts by placing such in tray openings and then inserting plants therein, or vice versa.

In particular embodiments, the tray also includes at least one vent extending through the tray and providing air flow communication between regions along the underside and topside of the tray. The one or more vents are configured for directing airborne water droplets, fog, or mist from along the underside of the tray to a region along the topside of the tray. The one or more vents serve to promote transport of water droplets, fog, or mist to region(s) of plants extending above the tray such as leaves and shoots.

The present subject matter includes collections of receptacles used with one or more trays, and/or collections of trays used with one or more receptacles. The receptacles and trays can be formed from a variety of materials however, plastics are preferred for many applications. Generator and Chamber for Producing Water Droplets, Fog, or Mist

The present subject matter plant growing systems utilize one or more generator(s) for producing airborne water droplets, fog, or mist which is directed into the receptacle. In many embodiments, the generator is in the form of a piezo-electric transducer or element that is submerged in water. Upon application of electric power to the piezo-electric element, the element vibrates and causes generation of water droplets, fog, or mist from the water surface in a region generally above the submerged element.

Typically, a wide assortment of generator(s) can be used so long as the average size of airborne water droplets, fog, or mist produced by the generator is within a range of from about 1 micron to about 500 microns, with many applications using a size of from 1 to 50 microns.

As noted, piezo-electric transducers can be used to generate such controlled sizes of water droplets, fog, or mist. Typically, such piezo-electric elements are submerged in water at a depth of approximately 1.0 to 1.5 inches and powered to thereby vibrate at a frequency within a range of from about 1 to 10 megahertz, and in many applications at about 4 to 5 megahertz. Although piezo-electric transducers or elements are preferred for many versions of the present subject matter systems, it will be appreciated that the systems can also use other types of generators for producing water droplets, fog, or mist.

Many versions of the present subject matter utilize a fog production chamber which is in flow communication with the receptacle. Thus, upon generation of water droplets, fog, or mist in the chamber, the water droplets, fog, or mist migrates or is actively directed or otherwise transported to the receptacle for contacting plants. The fog production chamber in many embodiments is configured to retain a quantity of water, within which the water droplet, fog, or mist generator is submerged; and an air space above the water level.

In particular versions of the present subject matter, the fog production chamber is incorporated into the receptacle. For example, the fog production chamber may be located within the receptacle and share one or more walls or regions of walls with the receptacle such as portion(s) of the bottom wall and/or portion(s) of the sidewall(s). Incorporating the fog production chamber within or as part of the receptacle eliminates conduits or other water transfer provisions otherwise needed between such components.

The water droplet, fog, or mist generator(s) can include provisions or controls for selectively varying the rate of droplet, fog, or mist production, and/or the size of the water droplets. Such provisions are typically in the form of electronic controls such as a potentiometer which vary or otherwise modify the electric power or its characteristics to the piezo-electric transducer or element.

### Water Reservoir

The present subject matter plant growing systems also utilize a water reservoir that is configured to automatically provide water to the generator(s) and maintain a predetermined water level in the fog production chamber. In many embodiments, the water reservoir is large enough to store a sufficient amount of water for typical operation of the generator(s) over a time period of from about 1 week up to a month or longer. Representative water volumes for the reservoir range from about 0.5 gallon to about 5 gallons. However, it will be appreciated that the present subject matter includes water reservoir sizes larger or smaller than these representative sizes.

In certain embodiments, the water reservoir includes gravity feed provisions for enabling water flow from the reservoir to the fog production chamber. Generally, such gravity feed provisions automatically dispense water to an outlet or other receiving region based upon the water head, height, or pressure in the reservoir. In certain embodiments the gravity feed provisions utilize a spring biased outlet in which the water head, height, or pressure counters a spring force which results in opening of the outlet to allow water exit from the reservoir. It will be understood that the present subject matter includes a wide array of gravity feed provisions and is not limited to the representative embodiment described herein.

The reservoir of the plant growing systems of the present subject matter stores, retains, and administers water to the system in an automatic fashion. User attention such as frequent refilling and/or monitoring of water level in the reservoir is not needed. In certain embodiments, the reservoir is typically large enough to store a sufficient quantity of water to last the entire time period associated with growth of the plants. In many applications, the reservoir is large enough to hold a quantity of water sufficient for one week of operation of the system. Thus, for plant cutting(s) requiring about two weeks to reach a desired growth, the reservoir is filled only once. The reservoir is typically filled with pure water or substantially pure water such as tap water available from most residential sources. The reservoir may also be used with nutrient enriched water or other aqueous liquids.

### Fan Assembly

Many embodiments of the present subject matter also include a fan assembly for directing water droplets, fog or mist produced in the fog production chamber to the receptacle. The fan assembly is typically electrically powered. The fan assembly can be configured in the system such that the fan draws ambient air from outside the receptacle, into the fog production chamber and specifically into the air space above water in the chamber, and then into the receptacle. The resulting flowing air stream transports airborne water droplets, fog or mist in the chamber into the receptacle. The previously noted vents in the tray can serve as outlets for discharging air and water droplets, fog, or mist from the interior of the receptacle to outside, i.e., regions external to the receptacle. Controls or other provisions can be provided to vary fan operation such as fan speed.

### Water-Recirculation

Certain versions of the present subject matter plant growing systems utilize water-recirculation provisions. In particular embodiments, a sloping or downwardly directed receptacle bottom wall is provided that directs condensed water from water droplets, fog, or mist in the receptacle toward the fog production chamber or inlet thereto. The growing systems can include one or more openings or liquid ports for transporting water in the receptacle to the fog production chamber. These openings or liquid ports are in communication with the fog production chamber. Typically, the port(s) is located at a bottom-most region of the sloping bottom wall of the receptacle.

### Fail-Safe Provisions

One or more fail-safe provisions are also utilized in many versions of the present subject matter. For example, control provisions can be provided that prevent operation of the generator, e.g., the piezo-eiectric element, if a level of water in the reservoir is less than a predetermined minimum water level. Alternatively or in addition, such control provisions can be configured to limit operation of the piezo-electric element if a level of water in the fog production chamber is less than a predetermined minimum water level.

One or more alarms and/or indicators can be provided which provide audible and/or visual indication of such water level condition(s) existing. For example, light emitting element(s) can be provided that emit light if such water levels occur. In certain versions of the present subject matter, the light emitting element(s) can be configured to emit a green light when the noted water level(s) are above or greater than the mentioned predetermined minimum water level(s). The light emitting element(s) can also be configured to emit a red light when the water level(s) are below or less than the noted predetermined minimum water level(s). The present subject matter systems are not limited to these aspects and include a wide array of other operating and/or visual indicators.

In particular embodiments, the control provisions that limit operation of the piezo-electric element can be configured to preclude operation if a water level in the reservoir is less than a predetermined volume of water, which for example can be based upon the total volumetric capacity of the reservoir. For example, the predetermined volume at which operation of the piezo-electric element is precluded can be 30% of the total capacity of the reservoir. Alternatively, the predetermined volume could be any one of 25%, 20%, 15%, 10%, or 5% or some other percentage based upon the total capacity of the reservoir. Similar control provisions could be based upon the height of water in the reservoir. Likewise, similar controls can be provided based upon water in the fog production chamber.

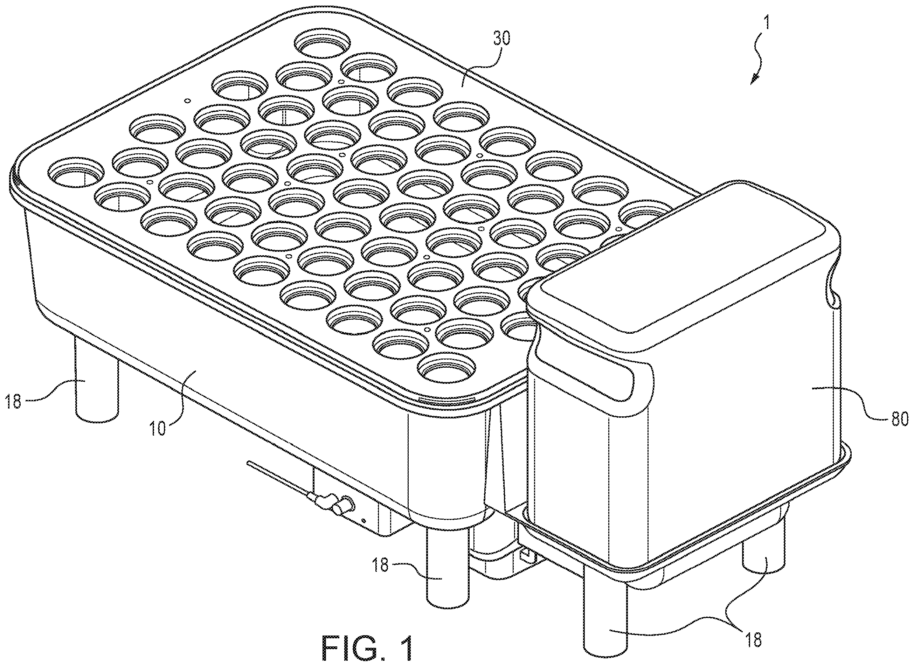

Figure 1 is a perspective view of an embodiment of a plant growing system 1 in accordance with the present subject matter. The system 1 comprises a receptacle 10, a tray 30 disposed on the receptacle 10, and a water reservoir 80 in communication with the receptacle 10. The system 1 may additionally comprise one or more legs 18.

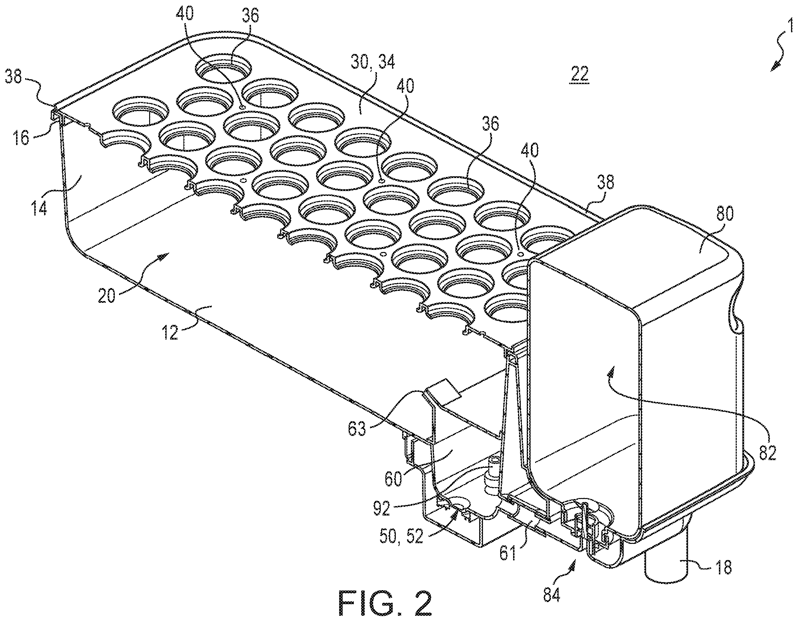

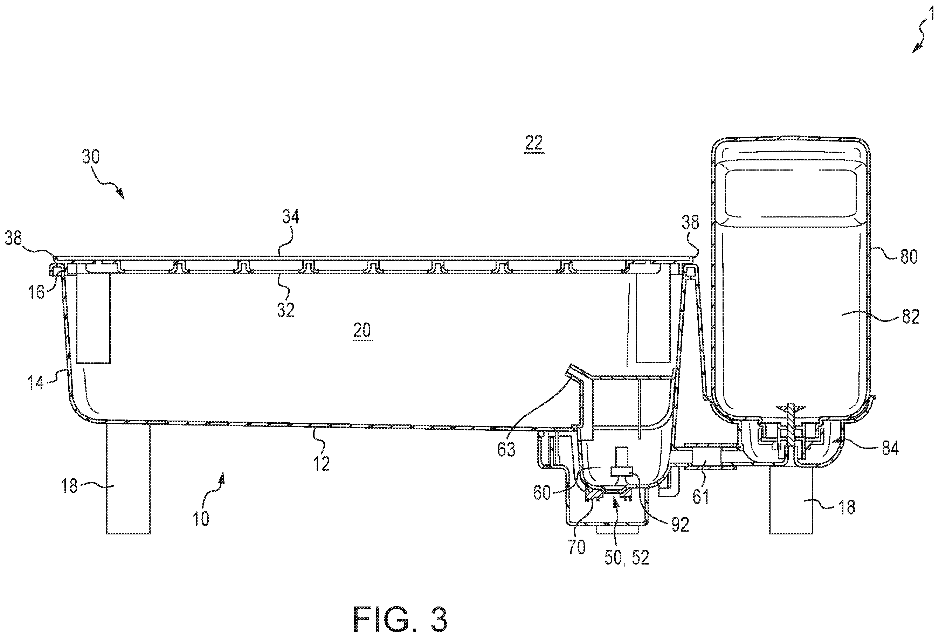

Figures 2 and 3 illustrate a cross section taken along a length dimension of the plant growing system 1. These figures further show the receptacle 10 having a bottom wall 12 and one or more sidewalls 14 extending upward from the periphery of the bottom wall 12. The sidewalls 14 extend to a distal edge 16 that defines a receptacle open face. The tray 30 is sized and shaped to be positioned with the receptacle 10. The tray 30 defines an underside 32 and an oppositely directed topside 34. The tray 30 additionally defines a plurality of openings 36 extending between the underside 32 and the topside 34. The receptacle bottom wall 12, receptacle sidewalls 14, and tray underside 32 generally define a receptacle interior region 20. The tray 30 typically includes one or more vents 40 configured to direct water droplets, fog, or mist from the receptacle interior 20 such as from along the underside 32 of the tray 30, to a region along the topside 34 of the tray, i.e., the exterior 22 of the receptacle 10. These figures also illustrate a tray lip 38 generally extending about the periphery of the tray 30. The lip 38 is configured to fittingly engage the distal edge 16 of the sidewalls 14 of the receptacle 10.

Referring further to Figures 2 and 3, the plant growing system also comprises a fog production chamber 60. The fog production chamber 60 is in communication with the water reservoir 80 by a water supply port 61. The fog production chamber 60 is in communication with the interior 20 of the receptacle 10 by one or more water droplet, fog or mist discharge ports 63 extending between the chamber 60 and the receptacle interior 20. Disposed in, or immediately below and in communication with, the fog production chamber 60 is one or more generator(s) 50, which as previously noted are typically in the form of piezo-electric element(s) 52. The system 1 also comprises controls 70 for adjusting and/or governing operation of the generator 50. Additional aspects and components of the controls 70 are described herein.

The plant growing system also comprises in particular versions, fail-safe provisions that limit or prevent operation of the system and in particular versions, limits operation of the generator 50 or piezo-electric element 52 if the level of water in the fog production chamber 60 is less than a predetermined minimum water level. An example of such fail-safe provisions are shown in Figures 2 and 3 in which a float switch assembly 92 changes state, e.g., opens an electrical circuit, depending upon the amount or height of water level in the fog production chamber.

The plant growing system 1 comprises also the water reservoir 80 which is typically positioned alongside and in close proximity to the receptacle 10. The reservoir 80 defines an interior region 82 for holding water and gravity feed provisions 84 that automatically dispense water contained in the interior 82 of the receptacle 80 to the fog production chamber 60, to maintain a predetermined level of water in the chamber 60.

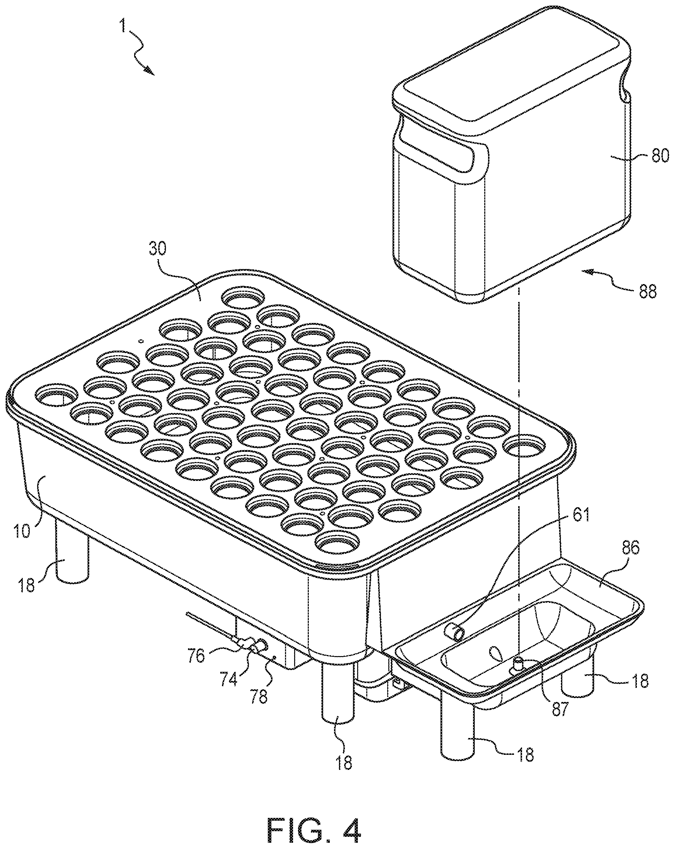

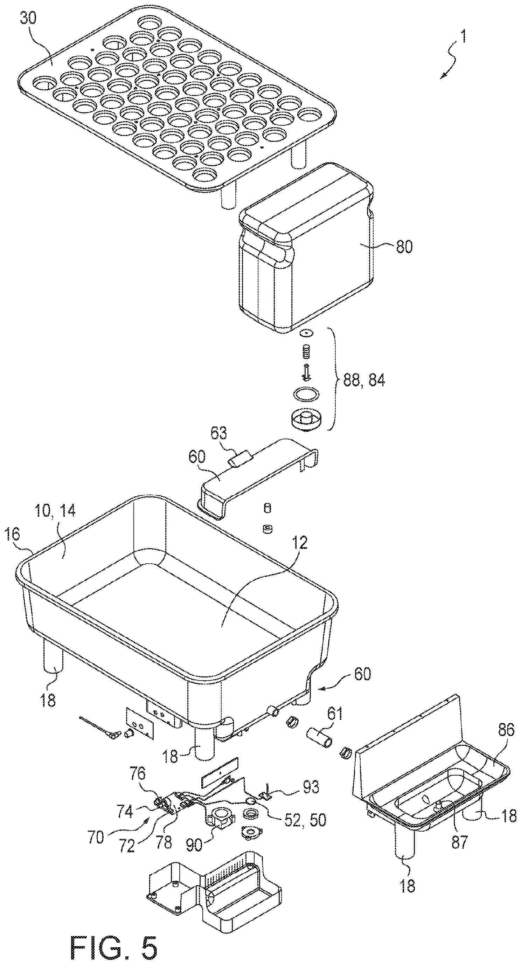

In many versions of the present subject matter, the water reservoir 80 is removable to facilitate filling or adding water thereto. Figures 4 and 5 illustrate the plant growing system 1 with the reservoir 80 removed from a reservoir base 86. The reservoir 80 defines an opening (not shown) that is closed by a cap assembly 88 which may also constitute all or a portion of the gravity feed provisions 84. The reservoir 80 is filled or refilled by inverting the reservoir from the position shown in the referenced figures and adding water through the opening. The cap assembly 88 is then fitted over the opening to thereby close the reservoir. The reservoir 80 is then positioned as shown in Figure 4 and the cap assembly 88 mated with a member 87 exposed and upwardly extending from the reservoir base 86. Upon engagement between the member 87 and the cap assembly 88, water can flow from the interior 82 of the receptacle 80 into the reservoir base 86, through the water supply port 61, and into the fog production chamber 60.

Figure 5 further illustrates the controls 70 for the generator 50. The controls 70 can be in the form of an electronic assembly generally including a printed circuit board 72. Figure 5 also illustrates a fan assembly 90 which is powered and controlled via the previously noted printed circuit board 72. The noted piezo-electric element 52 is also powered and controlled by the printed circuit board 72. The printed circuit board 72 can include a selectively adjustable potentiometer 74, an input or jack 76 for receiving electrical power, e.g., 12 Volt DC electrical power, and one or more light(s) 78. In certain embodiments, the printed circuit board 72 can also include a switch 93 that is associated with the switch assembly 92 that serves as a fail-safe provision for operation of the generator 50.

It will be appreciated that the present subject matter includes a wide array of components and component configurations, and is not limited to the particular embodiment depicted in Figures 1-5.

The soilless plant growing systems of the present subject matter can be implemented in a low cost, consumer friendly system. The systems can utilize ambient air and light and employ receptacles for retaining water droplets, fog, or mist at atmospheric pressure. The systems provide convenience and are easy to use thereby overcoming many problems of previously known plant growing systems. As noted, in many embodiments of the present subject matter plant growing systems, the systems are free of sensors that sense growing parameters such as temperature, humidity, gas composition, and combinations thereof. Avoiding the use of such sensors and associated controls reduces cost and complexity and typically improves operating reliability of the resulting systems.

Many other benefits will no doubt become apparent from future application and development of this technology.

As described hereinabove, the present subject matter solves many problems associated with previous strategies, systems and/or devices. However, it will be appreciated that various changes in the details, materials and arrangements of components, which have been herein described and illustrated in order to explain the nature of the present subject matter, may be made by those skilled in the art without departing from the scope of the claimed subject matter, as expressed in the appended claims.

## Claims

1. A soilless plant growing system (1) comprising:
a receptacle (10) having a bottom wall (12) and one or more sidewalls (14) extending upward from the bottom wall (12) to a distal edge (16) defining a receptacle open face, wherein the bottom wall (12) of the receptacle (10) is oriented to downwardly slope toward the fog production chamber (60) such that water droplets condensed within the receptacle (10) return to the fog production chamber (60);
a tray (30) sized and shaped to be positioned with the receptacle (10), the tray (30) defining an underside (32) and an oppositely directed topside (34), the tray (30) further defining a plurality of openings (36) extending between the underside (32) and the top side (34);
a fog production chamber (60) in flow communication with the receptacle (10);
a water reservoir (80) in flow communication with the fog production chamber (60) and including gravity feed provisions (84) for enabling water flow from the reservoir (80) to the fog production chamber (60), and maintaining a predetermined water level in the fog production chamber (60), the water reservoir (80) including a spring biased outlet configured to maintain a predetermined water level in the fog production chamber (60);
a piezo-electric element (52) disposed in the fog production chamber (60) and at a height below the water level in the fog production chamber (60), the piezo-electric element (52) configured to generate water droplets from water in the chamber (60) upon application of electric power to the piezo-electric element (52), wherein the water droplets migrate from the fog production chamber (60) to the receptacle (10),
wherein the system (1) is free of covers or lids extending across either or both of (i) the open face of the receptacle (10), and (ii) the tray (30) positioned with the receptacle (10).

2. The plant growing system (1) of claim 1 wherein the fog production chamber (60) defines an air space above the water level, the system (1) further comprising:
an electric fan assembly (90) in air flow communication with the air space.

3. The plant growing system of claim 1 wherein the tray (30) further defines at least one vent configured to direct water droplets from along the underside (32) of the tray (30) to a region along the topside (34) of the tray (30).

4. The plant growing system (1) of claim 1 further comprising:
control provisions which prevent operation of the piezo-electric element (52) to generate water droplets if a level of water in the reservoir (80) is less than a predetermined minimum water level.

5. The plant growing system of claim 1 further comprising:
a selectively adjustable controller for governing operation of the piezo-electric element (52).

6. The plant growing system of claim 1 further comprising:
a light emitting element that emits light if a level of water in the receptacle (10) is less than a predetermined minimum water level.

7. The plant growing system (1) of claim 1 wherein the system (1) is free of sensors that sense a growing parameter selected from the group consisting of temperature, humidity, gas composition, and combinations thereof.

## Patentansprüche

1. Erdloses Pflanzenzuchtsystem (1), umfassend:
einen Behälter (10) mit einer Bodenwand (12) und einer oder mehreren Seitenwänden (14), die sich von der Bodenwand (12) nach oben zu einer distalen Kante (16) erstrecken, die eine offene Behälterfläche definiert, wobei die Bodenwand (12) des Behälters (10) so ausgerichtet ist, dass sie nach unten in Richtung der Nebelerzeugungskammer (60) geneigt ist, so dass Wassertröpfchen, die innerhalb des Behälters (10) kondensiert sind, in die Nebelerzeugungskammer (60) zurückkehren;
eine Platte (30), die so bemessen und gestaltet ist, dass sie mit dem Behälter (10) positioniert werden kann, wobei die Platte (30) eine Unterseite (32) und eine entgegengesetzt gerichtete Oberseite (34) definiert, wobei die Platte (30) ferner eine Vielzahl von Öffnungen (36) definiert, die sich zwischen der Unterseite (32) und der Oberseite (34) erstrecken;
eine Nebelerzeugungskammer (60) in Strömungsverbindung mit dem Behälter (10);
ein Wasserreservoir (80), das in Strömungsverbindung mit der Nebelerzeugungskammer (60) steht und Schwerkraftzuführeinrichtungen (84) beinhaltet, um zu ermöglichen, dass Wasser von dem Reservoir (80) zu der Nebelerzeugungskammer (60) strömt, und um einen vorbestimmten Wasserpegel in der Nebelerzeugungskammer (60) aufrechtzuerhalten, wobei das Wasserreservoir (80) einen federvorgespannten Auslass enthält, der so konfiguriert ist, dass er einen vorbestimmten Wasserpegel in der Nebelerzeugungskammer (60) aufrechterhält
ein piezoelektrisches Element (52), das in der Nebelerzeugungskammer (60) und in einer Höhe unterhalb des Wasserpegels in der Nebelerzeugungskammer (60) angeordnet ist, wobei das piezoelektrische Element (52) so konfiguriert ist, dass es bei Anlegung von elektrischer Energie an das piezoelektrische Element (52) aus Wasser in der Kammer (60) Wassertröpfchen erzeugt, wobei die Wassertröpfchen von der Nebelerzeugungskammer (60) zu dem Behälter (10) migrieren,
wobei das System (1) frei von Abdeckungen oder Deckeln ist, die sich entweder über (i) die offene Seite des Behälters (10) oder über (ii) die mit dem Behälter (10) positionierte Platte (30) oder über beide erstrecken.

2. Pflanzenzuchtsystem gemäß Anspruch 1, wobei die Nebelerzeugungskammer (60) einen Luftraum oberhalb des Wasserpegels definiert, wobei das System (1) ferner umfasst:
eine elektrische Ventilatoranordnung (90) in Luftströmungsverbindung mit dem Luftraum.

3. Pflanzenzuchtsystem gemäß Anspruch 1, wobei die Platte (30) ferner mindestens eine Entlüftung definiert, die so konfiguriert ist, dass sie Wassertröpfchen von entlang der Unterseite (32) der Platte (30) zu einem Bereich entlang der Oberseite (34) der Platte (30) leitet.

4. Pflanzenzuchtsystem gemäß Anspruch 1, ferner umfassend:
Steuereinrichtungen, die verhindern, dass der Betrieb des piezoelektrischen Elements (52) Wassertröpfchen erzeugt, wenn ein Wasserpegel im Reservoir (80) niedriger als ein vorbestimmter Mindestwasserpegel ist.

5. Pflanzenzuchtsystem gemäß Anspruch 1, ferner umfassend:
einen selektiv einstellbaren Regler für die Betriebssteuerung des piezoelektrischen Elements (52).

6. Pflanzenzuchtsystem gemäß Anspruch 1, ferner umfassend:
ein lichtemittierendes Element, das Licht emittiert, wenn ein Wasserpegel in dem Behälter (10) niedriger als ein vorbestimmter Mindestwasserpegel ist.

7. Pflanzenzuchtsystem gemäß Anspruch 1, wobei das System (1) frei von Sensoren ist, die einen Wachstumsparameter erfassen, der aus der Gruppe ausgewählt ist, die aus Temperatur, Feuchtigkeit, Gaszusammensetzung und Kombinationen davon besteht.

## Revendications

1. Un système de culture de plantes hors sol (1), comprenant :
un réceptacle (10) avec une paroi de dessous (12) et une ou plusieurs parois latérales (14) s'étendant vers le haut à partir de la paroi de dessous (12) jusqu'à un bord distal (16) définissant une face ouverte de réceptacle, la paroi de dessous (12) du réceptacle (10) étant orientée en pente descendante vers la chambre de production de brouillard (60) de telle sorte que les gouttelettes d'eau condensées à l'intérieur du réceptacle (10) retournent à la chambre de production de brouillard (60) ;
un plateau (30) dimensionné et conformé pour être positionné avec le réceptacle (10), le plateau (30) définissant un côté de dessous (32) et un côté de dessus (34) dirigé en sens opposé, le plateau (30) définissant en outre une pluralité d'ouvertures (36) s'étendant entre le côté de dessous (32) et le côté de dessus (34) ;
une chambre de production de brouillard (60) en communication de flux avec le réceptacle (10) ;
un réservoir d'eau (80) en communication de flux avec la chambre de production de brouillard (60) et comprenant des moyens d'alimentation par gravité (84) pour permettre à l'eau de s'écouler du réservoir (80) vers la chambre de production de brouillard (60), et maintenir un niveau d'eau prédéterminé dans la chambre de production de brouillard (60), le réservoir d'eau (80) comprenant une sortie sollicitée par ressort configurée pour maintenir un niveau d'eau prédéterminé dans la chambre de production de brouillard (60) ;
un élément piézoélectrique (52) disposé dans la chambre de production de brouillard (60) et à une hauteur située au-dessous du niveau d'eau dans la chambre de production de brouillard (60), l'élément piézoélectrique (52) étant configuré pour générer des gouttelettes d'eau à partir de l'eau dans la chambre (60) sur application d'une alimentation électrique à l'élément piézoélectrique (52), les gouttelettes d'eau migrant de la chambre de production de brouillard (60) vers le réceptacle (10),
dans lequel le système (1) est dépourvu de capots ou de couvercles s'étendant en travers soit (i) de la face ouverte du réceptacle (10) et (ii) du plateau (30) positionné avec le réceptacle, soit en travers des deux.

2. Le système de culture de plantes de la revendication 1, dans lequel la chambre de production de brouillard (60) définit un volume d'air au-dessus du niveau de l'eau, le système (1) comprenant en outre :
un ensemble de ventilation électrique (90) en communication de flux d'air avec le volume d'air.

3. Le système de culture de plantes de la revendication 1, dans lequel le plateau (30) définit en outre au moins un évent configuré pour diriger les gouttelettes depuis le long du côté de dessous (32) du plateau (30) jusque vers une région le long du côté de dessus (34) du plateau (30).

4. Le système de culture de plantes (1) de la revendication 1, comprenant en outre :
des moyens de contrôle qui empêchent l'actionnement de l'élément piézoélectrique (52) pour générer des gouttelettes d'eau si un niveau d'eau dans le réservoir (80) est au-dessous d'un niveau d'eau minimal prédéterminé.

5. Le système de culture de plantes de la revendication 1, comprenant en outre :
un contrôleur sélectivement ajustable pour piloter l'actionnement de l'élément piézoélectrique (52).

6. Le système de culture de plantes de la revendication 1, comprenant en outre :
un élément électroluminescent qui émet de la lumière si un niveau de l'eau dans le réceptacle (10) est au-dessous d'un niveau d'eau minimal prédéterminé.

7. Le système de culture de plantes (1) de la revendication 1, dans lequel le système (1) est dépourvu de capteurs qui détectent un paramètre de culture sélectionné dans le groupe constitué par la température, l'humidité, la composition gazeuse, et les combinaisons des précédents.
